(19) Europäisches Patentamt
European Patent Office
Office européen des brevets

(11) **EP 3 975 318 B1**

(12) **EUROPÄISCHE PATENTSCHRIFT**

(45) Veröffentlichungstag und Bekanntmachung des Hinweises auf die Patenterteilung:
**22.05.2024 Patentblatt 2024/21**

(21) Anmeldenummer: **21196242.8**

(22) Anmeldetag: **13.09.2021**

(51) Internationale Patentklassifikation (IPC):
***H01M 10/613*** (2014.01)

(52) Gemeinsame Patentklassifikation (CPC):
**H01M 10/63; H01M 10/613; H01M 10/625; H01M 10/6571;** H01M 2220/20; Y02E 60/10

(54) **FAHRZEUG MIT BATTERIEEINHEIT**

VEHICLE WITH THE BATTERY UNIT

VÉHICULE POURVU D'UNITÉ DE BATTERIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.09.2020 DE 102020212186**

(43) Veröffentlichungstag der Anmeldung:
**30.03.2022 Patentblatt 2022/13**

(73) Patentinhaber: **Siemens Mobility GmbH 81739 München (DE)**

(72) Erfinder: **Quast, Fabian 91058 Erlangen (DE)**

(74) Vertreter: **Siemens Patent Attorneys Postfach 22 16 34 80506 München (DE)**

(56) Entgegenhaltungen:
**WO-A1-2014/025667      DE-A1-102013 214 998 JP-A- 2010 062 130**

**Beschreibung**

Die Erfindung bezieht sich auf ein Fahrzeug mit zumindest einer Batterieeinheit mit einer oder mehreren Batteriezellen, zumindest einer Temperaturmesseinrichtung und einem Kühlkörper, die gemeinsam in einem Batteriegehäuse der Batterieeinheit untergebracht sind, wobei zur Kühlung der Batterieeinheit ein Kühlmittel durch den Kühlkörper fließen kann.

Derartige Batterieeinheiten werden beispielsweise im Bereich der Eisenbahntechnik als sogenannte Traktionsbatterien eingesetzt. Für die Lebensdauer und Leistungsfähigkeit einer Traktionsbatterie ist eine effiziente Kühlung der Batteriezellen von großer Bedeutung. Insbesondere bei hohen Umgebungstemperaturen und hoher Belastung sollte die Traktionsbatterie ausreichend gekühlt werden. Eine bekannte Lösung besteht darin, die Batteriezellen in thermischen Kontakt mit einer mit einem Kühlmedium (z. B. Wasser mit Frostschutzmittel) durchströmten Kühlkörper in Form zum Beispiel einer Aluminiumplatte zu bringen. Das Kühlmedium und damit die Kühlplatte können dabei eine Temperatur unterhalb der Umgebungstemperatur annehmen.

Wenn Teile der Traktionsbatterie, insbesondere die elektrische Isolierung zwischen Batteriezelle und Kühlkörper, unter die Umgebungstemperatur abgekühlt werden, erhöht sich das Risiko, dass dort Betauung bzw. Kondenswasserbildung auftritt, erheblich. Falls dies passiert, kann es zu Erdschlüssen oder reduzierten Isolationswiderständen kommen, die die Betriebsfähigkeit der Traktionsbatterie verhindern. Unter Umständen kann Kondenswasser auch zu einem gefährlichen Kurzschluss in der Traktionsbatterie führen.

Eine gattungsgemäße Batterieeinheit ist aus Dokument WO 2014/025667 A1 bekannt. Weiterhin bekannt sind die Dokumente DE 10 2013 214998 A1 und JP 2010 062130 A.

Der Erfindung liegt die Aufgabe zugrunde, die Betriebssicherheit von kühlbaren Batterieeinheiten zu verbessern.

Diese Aufgabe wird erfindungsgemäß durch ein Fahrzeug sowie ein Verfahren mit den jeweiligen Merkmalen gemäß den unabhängigen Patentansprüchen gelöst. Vorteilhafte Ausgestaltungen der erfindungsgemäßen Batterieeinheit sind in abhängigen Patentansprüchen angegeben.

Danach ist erfindungsgemäß vorgesehen, dass in dem Batteriegehäuse zumindest eine Luftfeuchtemesseinrichtung angeordnet ist, die geeignet ist, die Luftfeuchte innerhalb des Batteriegehäuses unter Bildung eines die Luftfeuchte angebenden Feuchtewerts zu messen, und mit der Luftfeuchtemesseinrichtung und der Temperaturmesseinrichtung eine Steuereinrichtung in Verbindung steht, die die Temperatur des Kühlmittels in Abhängigkeit von dem gemessenen Feuchtewert und einem von der Temperaturmesseinrichtung gemessenen Temperaturmesswert beeinflusst.

Ein wesentlicher Vorteil der erfindungsgemäßen Batterieeinheit besteht darin, dass durch die erfindungsgemäß vorgesehene Luftfeuchtemessung innerhalb des Batteriegehäuses in Kombination mit der erfindungsgemäß vorgesehenen Steuerung der Temperatur des Kühlmittels eine Betauung von Komponenten oder von Komponentenabschnitten innerhalb des Batteriegehäuses zuverlässig vermieden werden kann, sodass insbesondere auch die Gefahr von Kurzschlüssen zwischen den Batteriepolen der Batteriezellen durch Kondenswasser reduziert werden kann.

Ein weiterer wesentlicher Vorteil der erfindungsgemäßen Batterieeinheit besteht darin, dass durch die erfindungsgemäß vorgesehene Luftfeuchtemessung und die Überwachung der Luftfeuchteverhältnisse innerhalb des Batteriegehäuses die Batteriezellen tiefer heruntergekühlt werden können, ohne die Betriebssicherheit mit Blick auf Kondenswasserbildung zu gefährden, als dies ohne eine solche Überwachung vertretbar möglich wäre.

Vorteilhaft ist es, wenn die Steuereinrichtung mit einer das Kühlmittel kühlenden Kühleinrichtung in Verbindung steht und die Kühlleistung der Kühleinrichtung in Abhängigkeit von dem gemessenen Feuchtewert und dem gemessenen Temperaturmesswert steuert.

Alternativ oder zusätzlich kann in vorteilhafter Weise vorgesehen werden, dass die Steuereinrichtung mit einer Heizeinrichtung, die das Kühlmittel erwärmen kann, in Verbindung steht und die Heizleistung der Heizeinrichtung in Abhängigkeit von dem gemessenen Feuchtewert und dem gemessenen Temperaturmesswert steuert.

Die Steuereinrichtung ist vorzugsweise derart ausgestaltet, dass sie mittels des gemessenen Feuchtewerts einen die Taupunkttemperatur der Luft angebenden Taupunkttemperaturwert ermittelt und die Temperatur des Kühlmittels derart beeinflusst, dass der Temperaturmesswert größer als der Taupunkttemperaturwert ist.

Vorteilhaft ist es insbesondere, wenn die Steuereinrichtung die Temperatur des Kühlmittels erhöht, wenn der Temperaturmesswert über ein vorgegebenes Maß hinaus zu dicht an dem Taupunkttemperaturwert liegt oder diesen unterschreitet.

Ist die Kühleinrichtung steuerbar, so ist es vorteilhaft, wenn die Steuereinrichtung die Kühlleistung der Kühleinrichtung reduziert, wenn der Temperaturmesswert über ein vorgegebenes Maß hinaus zu dicht an dem Taupunkttemperaturwert liegt oder diesen unterschreitet.

Mit Blick auf eine möglichst genaue Feuchtemessung ist es vorteilhaft, wenn die Temperaturmesseinrichtung an einer ("kalten") Stelle innerhalb des Batteriegehäuses angeordnet ist, die beim Betrieb der Kühleinrichtung kälter als eine andere ("warme") Stelle innerhalb des Batteriegehäuses ist, und die Luftfeuchtemesseinrichtung an dieser anderen ("warmen") Stelle angeordnet ist.

Bei einer weiteren als vorteilhaft angesehenen Ausführungsvariante ist vorgesehen, dass die Batterieeinheit eine weitere Temperaturmesseinrichtung aufweist, die mit der Luftfeuchtemesseinrichtung eine Sensorbaugruppe bildet. Die Messergebnisse dieser weiteren Temperaturmesseinrichtung, die vorzugsweise gemeinsam mit der Feuchtemesseinrichtung an der "warmen" Stelle angeordnet ist, kann beispielsweise zur Kontrolle der Arbeitsweise der an der "kalten" Stelle angeordneten Temperaturmesseinrichtung dienen, indem die Messergebnisse der beiden Temperaturmesseinrichtungen miteinander verglichen werden.

Erfindungsgemäß ist das Batteriegehäuse mittels einer Belüftungseinrichtung belüftbar. Die Belüftungseinrichtung speist erfindungsgemäß getrocknete Luft in das Batteriegehäuse ein.

Erfindungsgemäß ist die Belüftungseinrichtung an ein Druckluftsystem angeschlossen, das Druckluft zum Betrieb einer Fahrzeugkomponente, insbesondere Fahrzeugbremse, zur Verfügung stellt, und das Batteriegehäuse mit der Druckluft belüftet wird oder die Druckluft zunächst entspannt wird und die entspannte Luft in das Batteriegehäuse eingespeist wird.

Mit Blick auf eine Belüftung wird es als vorteilhaft angesehen, wenn das Batteriegehäuse zumindest eine Lufteinlassöffnung zum Einspeisen von Luft und zumindest eine Luftauslassöffnung zum Ausströmen der Luft aufweist, wobei die zumindest eine Lufteinlassöffnung an einer Gehäuseseite und die zumindest eine Luftauslassöffnung an der gegenüberliegenden Gehäuseseite angeordnet ist.

Das Batteriegehäuse ist vorzugsweise länglich und wird durch zwei an den Enden des länglichen Batteriegehäuses befindliche, einander entfernt diametral gegenüberliegende Endflächen begrenzt. In diesem Falle ist die zumindest eine Lufteinlassöffnung vorzugsweise an einer der Endflächen und die zumindest eine Luftauslassöffnung an der diametral gegenüberliegenden anderen Endfläche angeordnet.

Zur Reduktion der Feuchtigkeit in dem Batteriegehäuse kann außerdem in vorteilhafter Weise vorgesehen sein, dass in dem Batteriegehäuse zumindest ein Feuchtespeicher angeordnet ist, der Feuchte aufnehmen und gespeicherte Feuchte abgeben kann.

Das Fahrzeug ist insbesondere ein Schienenfahrzeug.

Die Erfindung bezieht sich außerdem auf ein Verfahren zum Betreiben eines Fahrzeugs mit zumindest einer Batterieeinheit, die eine oder mehrere Batteriezellen, zumindest eine Temperaturmesseinrichtung und einen Kühlkörper aufweist, die gemeinsam in einem Batteriegehäuse der Batterieeinheit untergebracht sind, wobei die Batterieeinheit mit einem Kühlmittel, das den Kühlkörper durchfließt, gekühlt wird. Erfindungsgemäß ist diesbezüglich vorgesehen, dass in dem Gehäuse zumindest eine Luftfeuchtemesseinrichtung angeordnet ist und mit dieser die Luftfeuchte innerhalb des Batteriegehäuses unter Bildung eines die Luftfeuchte angebenden Feuchtewerts gemessen wird und die Temperatur des Kühlmittels in Abhängigkeit von dem gemessenen Feuchtewert und einem von der Temperaturmesseinrichtung gemessenen Temperaturmesswert beeinflusst wird. Kennzeichnende wird das Batteriegehäuse mittels einer Belüftungseinrichtung belüftet, speist die Belüftungseinrichtung getrocknete Luft in das Batteriegehäuse ein, und ist die Belüftungseinrichtung an ein Druckluftsystem angeschlossen, das Druckluft zum Betrieb einer Fahrzeugkomponente, insbesondere einer Fahrzeugbremse, zur Verfügung stellt, und das Batteriegehäuse wird mit der Druckluft belüftet oder die Druckluft zunächst entspannt und die entspannte Luft in das Batteriegehäuse (50) eingespeist.

Bezüglich der Vorteile und vorteilhafter Ausgestaltungen des erfindungsgemäßen Verfahrens sei auf die obigen Ausführungen im Zusammenhang mit der erfindungsgemäßen Batterieeinheit und deren vorteilhafter Ausgestaltungen verwiesen.

Die Erfindung wird nachfolgend anhand von Ausführungsbeispielen näher erläutert. Dabei zeigen

Fig. 1-6      Ausführungsbeispiele für erfindungsgemäße Batterieeinheiten, und

Figur 7      ein Ausführungsbeispiel für ein erfindungsgemäßes Schienenfahrzeug.

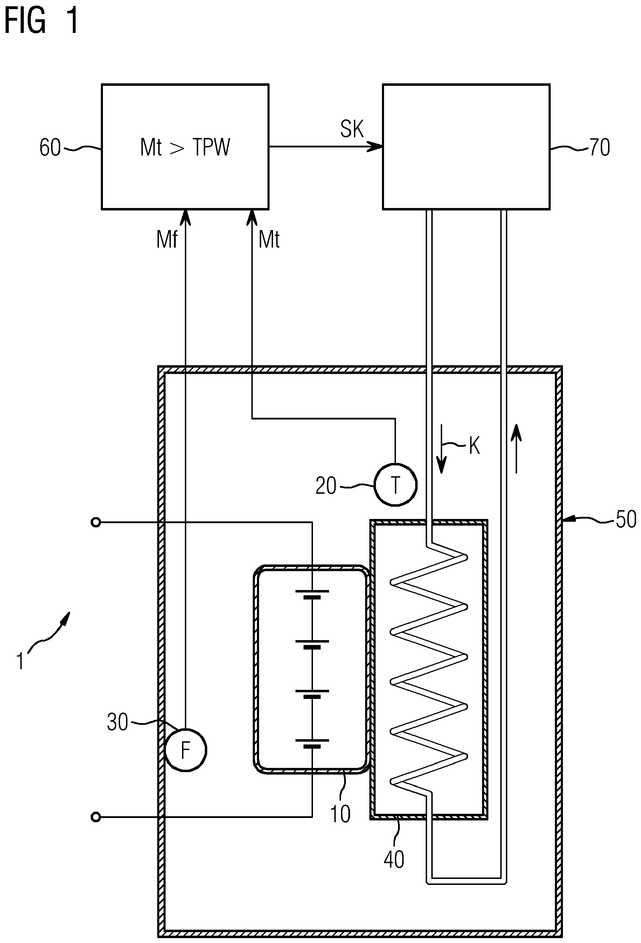

Die Figur 1 zeigt ein Ausführungsbeispiel für eine Batterieeinheit 1, die unter anderem eine oder mehrere Batteriezellen 10, eine Temperaturmesseinrichtung 20, eine Luftfeuchtemesseinrichtung 30 und einen Kühlkörper 40 umfasst, die gemeinsam in einem Batteriegehäuse 50 der Batterieeinheit 1 untergebracht sind. Zur Kühlung der Batterieeinheit 1 bzw. zur Kühlung der Batteriezellen 10 dient ein Kühlmittel K, das den Kühlkörper 40 durchfließen kann.

Die Batterieeinheit 1 weist darüber hinaus eine Steuereinrichtung 60 auf, die innerhalb des Batteriegehäuses 50 oder - wie in Figur 1 gezeigt - außerhalb des Batteriegehäuses 50 angeordnet sein kann. Die Steuereinrichtung 60 steht mit der Temperaturmesseinrichtung 20 und der Luftfeuchtemesseinrichtung 30 in Verbindung und wertet einen die Temperatur T angebenden Temperaturmesswert Mt der Temperaturmesseinrichtung 20 sowie einen die Luftfeuchte F angebenden Feuchtewert Mf der Luftfeuchtemesseinrichtung 30 aus. Bei dem Feuchtewert Mf handelt es sich vorzugsweise um einen Wert, der die absolute Feuchte der Luft im Bereich der Luftfeuchtemesseinrichtung 30 angibt; alternativ kann als Feuchtewert Mf auch eine Taupunktangabe übermittelt werden, die die Feuchte mittelbar angibt.

Die Steuereinrichtung 60 steht ausgangseitig mit einer Kühleinrichtung 70 in Verbindung, die das Kühlmittel K kühlen kann. Die Kühlleistung der Kühleinrichtung 70 wird von der Steuereinrichtung 60 mittels eines Steuersignals SK eingestellt.

Die Steuereinrichtung 60 ist derart ausgestaltet, dass sie auf der Basis des von der Luftfeuchtemesseinrichtung 30 gemessenen Feuchtewerts Mf einen die Taupunkttemperatur der Luft innerhalb des Batteriegehäuses 50 angebenden Taupunkttemperaturwert TPW ermittelt und die Temperatur des Kühlmittels K derart beeinflusst, dass der Temperaturmesswert Mt der Temperaturmesseinrichtung 20 stets größer als der Taupunkttemperaturwert TPW ist.

Ist der Temperaturmesswert Mt der Temperaturmesseinrichtung 20 kleiner als der Taupunkttemperaturwert TPW oder nähert sich der Temperaturmesswert Mt über ein vorgegebenes Maß hinaus an den Taupunkttemperaturwert TPW an und unterschreitet die Differenz zwischen dem Temperaturmesswert Mt und dem Taupunkttemperaturwert TPW einen vorgegebenen Mindestabstandswert G:

$$Mt - TPW < G,$$

so wird die Steuereinrichtung 60 mittels des Steuersignals SK die Kühleinrichtung 70 derart ansteuern, dass die Kühlleistung reduziert wird und die Temperatur des Kühlmittels K ansteigt, um zu vermeiden, dass es zu einer Betauung der innerhalb des Batteriegehäuses 50 befindlichen Komponenten oder zumindest von Abschnitten dieser Komponenten kommen kann.

Ist hingegen die Temperatur T, die von der Temperaturmesseinrichtung 20 gemessen wird, ausreichend viel höher als der Taupunkttemperaturwert TPW, so kann die Steuereinrichtung 60 die Kühleinrichtung 70 beispielsweise derart ansteuern, dass diese das Kühlmittel K maximal kühlt.

Erfinderseitig wurde festgestellt, dass die Messgenauigkeit von Luftfeuchtemesseinrichtungen für das beschriebene Steuerverfahren unter Umständen nicht ausreichend gut ist, wenn die Luftfeuchtemesseinrichtung 30 in einem Bereich innerhalb des Batteriegehäuses 50 untergebracht ist, bei dem die Gefahr einer Betauung bzw. Benetzung mit Feuchtigkeit besteht.

Aus diesem Grunde ist bei dem Ausführungsbeispiel gemäß Figur 1 vorgesehen, die Temperaturmesseinrichtung 20 und die Luftfeuchtemesseinrichtung 30 an unterschiedlichen Orten innerhalb des Batteriegehäuses 50 zu platzieren.

Vorzugsweise wird die Temperaturmesseinrichtung 20 in einem solchen Bereich des Batteriegehäuses 50 bzw. an einer Stelle innerhalb des Batteriegehäuses 50 angeordnet, der bzw. die beim Betrieb der Kühleinrichtung 70 besonders kalt ist. Aus diesem Grunde ist bei dem Ausführungsbeispiel gemäß Figur 1 die Temperaturmesseinrichtung 20 beispielsweise im Bereich des Zulaufes des Kühlmittels K in den Kühlkörper 50 angeordnet.

Die Luftfeuchtemesseinrichtung 30 ist von der kältesten Stelle innerhalb des Batteriegehäuses vorzugsweise möglichst weit entfernt und befindet sich also vorzugsweise in einem möglichst warmen Bereich des Batteriegehäuses 50, wo die Gefahr einer Betauung bzw.

Benetzung gering ist und damit eine hohe Messgenauigkeit für die Luftfeuchtemesseinrichtung 30 erreicht werden kann.

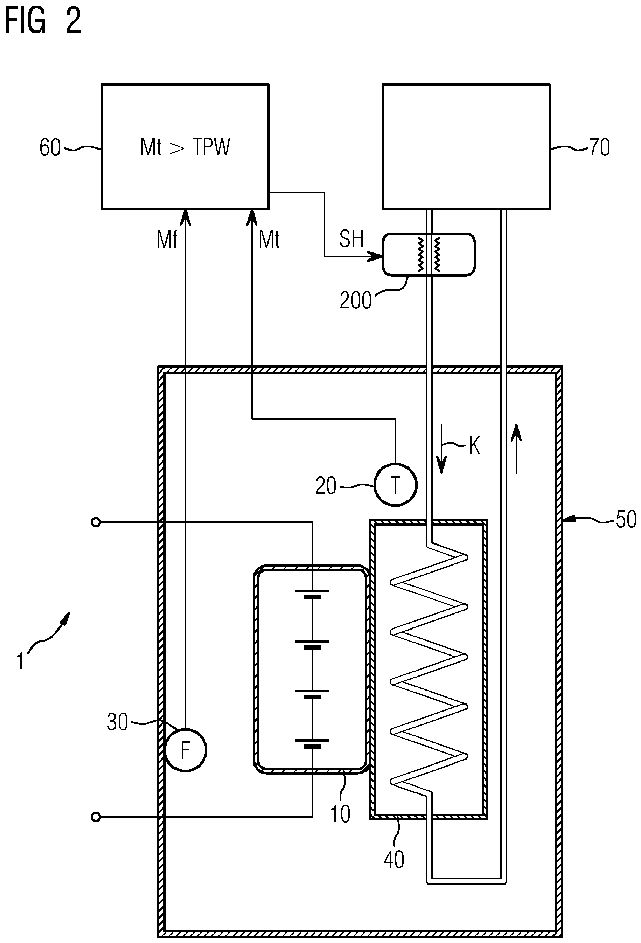

Die Figur 2 zeigt ein zweites Ausführungsbeispiel für eine erfindungsgemäße Batterieeinheit 1. Bei dem Ausführungsbeispiel gemäß Figur 1 wird beispielhaft davon ausgegangen, dass die Kühleinrichtung 70 von der Steuereinrichtung 60 nicht ansteuerbar ist und die Kühlleistung der Kühleinrichtung 70 somit nicht beeinflusst werden kann. Aus diesem Grunde ist bei dem Ausführungsbeispiel gemäß Figur 2 eine zusätzliche Heizeinrichtung 200 vorgesehen, die das Kühlmittel K heizen kann. Die Heizeinrichtung 200 wird von der Steuereinrichtung 60 in Abhängigkeit von dem Feuchtewert Mf und dem Temperaturmesswert Mt angesteuert, und zwar mittels eines Steuersignals SH.

Die Steuereinrichtung 60 wird mit der Heizeinrichtung 200 das Kühlmittel K vorzugsweise erwärmen, wenn der Temperaturmesswert Mt der Temperaturmesseinrichtung 20 kleiner als der Taupunkttemperaturwert TPW ist oder sich der Temperaturmesswert Mt dem Taupunkttemperaturwert TPW zu sehr nähert bzw. die Differenz zwischen dem Temperaturmesswert Mt und dem Taupunkttemperaturwert TPW einen vorgegebenen Mindestabstandswert G unterschreitet:

$$Mt - TPW < G,$$

um zu vermeiden, dass es zu einer Betauung der innerhalb des Batteriegehäuses 50 befindlichen Komponenten oder zumindest von Abschnitten dieser Komponenten kommen kann.

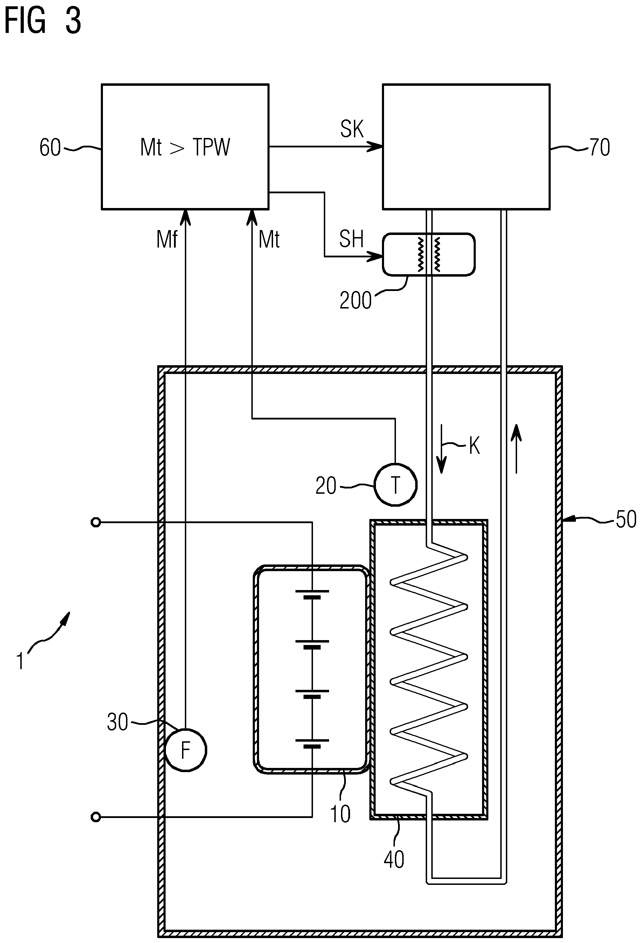

Die Figur 3 zeigt ein Ausführungsbeispiel, das eine Kombination der Ausführungsbeispiele gemäß den Figuren 1 und 2 darstellt. Bei dem Ausführungsbeispiel gemäß Figur 3 ist die Steuereinrichtung 60 in der Lage, sowohl die Kühleinrichtung 70 über ein Steuersignal SK anzusteuern, um die Kühlleistung der Kühleinrichtung 70 zu reduzieren, als auch die Heizeinrichtung 200 anzusteuern, um - falls nötig - mittels des Steuersignals SH ein Heizen des Kühlmittels K hervorrufen zu können.

Die Steuereinrichtung 60 wird die Kühlleistung der Kühleinrichtung 70 vorzugsweise reduzieren und die Heizleistung der Heizeinrichtung 200 vorzugsweise erhöhen, wenn der Temperaturmesswert Mt der Temperaturmesseinrichtung 20 kleiner als der Taupunkttemperaturwert TPW ist oder sich der Temperaturmesswert MT zu sehr an den Taupunkttemperaturwert TPW annähert bzw. die Differenz zwischen dem Temperaturmesswert Mt und dem Taupunkttemperaturwert TPW einen vorgegebenen Mindestabstandswert G unterschreitet:

$$Mt - TPW < G,$$

um zu vermeiden, dass es zu einer Betauung der innerhalb des Batteriegehäuses 50 befindlichen Komponenten oder zumindest von Abschnitten dieser Komponenten kommen kann.

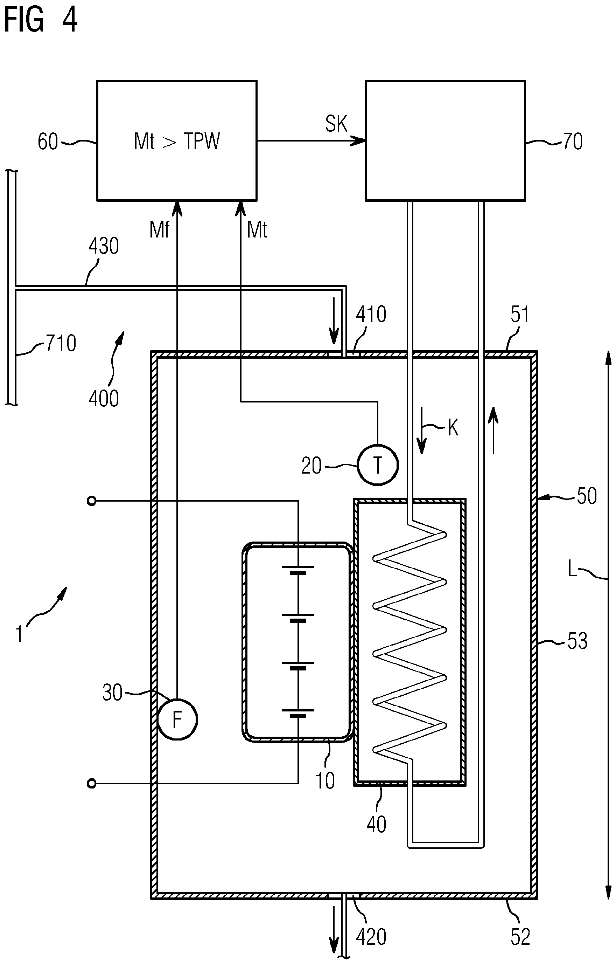

Die Figur 4 zeigt ein viertes Ausführungsbeispiel für eine erfindungsgemäße Batterieeinheit 1. Das Ausführungsbeispiel gemäß Figur 4 entspricht im Wesentlichen dem Ausführungsbeispiel gemäß Figur 1 mit dem einzigen Unterschied, dass ein zusätzliches Belüftungssystem 400 vorgesehen ist, das bei dem Ausführungsbeispiel gemäß Figur 4 zumindest eine Lufteinlassöffnung 410, zumindest eine Luftauslassöffnung 420 sowie eine mit der Lufteinlassöffnung 410 verbundene Druckluftleitung 430 umfasst. Die Lufteinlassöffnung 410 und die Luftauslassöffnung 420 sind vorzugsweise auf einander gegenüberliegenden Gehäuseseiten des Batteriegehäuses 50 angeordnet.

Mittels der Belüftungseinrichtung 400 kann getrocknete und/ oder gekühlte Luft in das Batteriegehäuse 50 eingespeist werden, um die Luftfeuchtigkeit innerhalb des Batteriegehäuses 50 zu reduzieren und die Gefahr einer Betauung von Komponenten innerhalb des Batteriegehäuses 50 im Falle zu kalter Komponentenabschnitte zu reduzieren. Dabei kann die Druckluft alternativ bereits außerhalb des Batteriegehäuses 50 oder erst in dem Batteriegehäuse 50 entspannt werden. Vorteilhaft weist eine für Fahrzeugbremsen insbesondere eines Schienenfahrzeugs verwendete Druckluft eine nur geringe Feuchtigkeit auf, sodass in das Batteriegehäuse 50 eingespeiste Druckluft eine entsprechend geringe Feuchtigkeit aufweist.

Das Batteriegehäuse 50 ist vorzugsweise länglich und wird durch zwei an den Enden des länglichen Batteriegehäuses 50 befindliche, einander entfernt diametral gegenüberliegende Endflächen 51 und 52 begrenzt; die Länge der die Endflächen 51 und 52 verbindenden Mantelfläche 53 ist mit dem Bezugszeichen L gekennzeichnet. Vorzugsweise gilt:

$$L > \sqrt{A(E1)}$$

und

$$L > \sqrt{A(E2)}$$

wobei A(E1) die Querschnittsfläche der Endfläche 51 und A(E2) die Querschnittsfläche der Endfläche 52 bezeichnet.

Besonders vorteilhaft für die Belüftung ist es, wenn gilt:

$$L > 10\sqrt{A(E1)}$$

und

$$L > 10\sqrt{A(E2)}$$

Die zumindest eine Lufteinlassöffnung 410 ist vorzugsweise an einer der Endflächen 51 und die zumindest eine Luftauslassöffnung 420 an der diametral gegenüberliegenden anderen Endfläche 52 angeordnet.

Die in der Figur 4 gezeigte Belüftungseinrichtung 400 kann selbstverständlich auch bei den Ausführungsbeispielen gemäß den Figuren 2 und 3 eingesetzt werden.

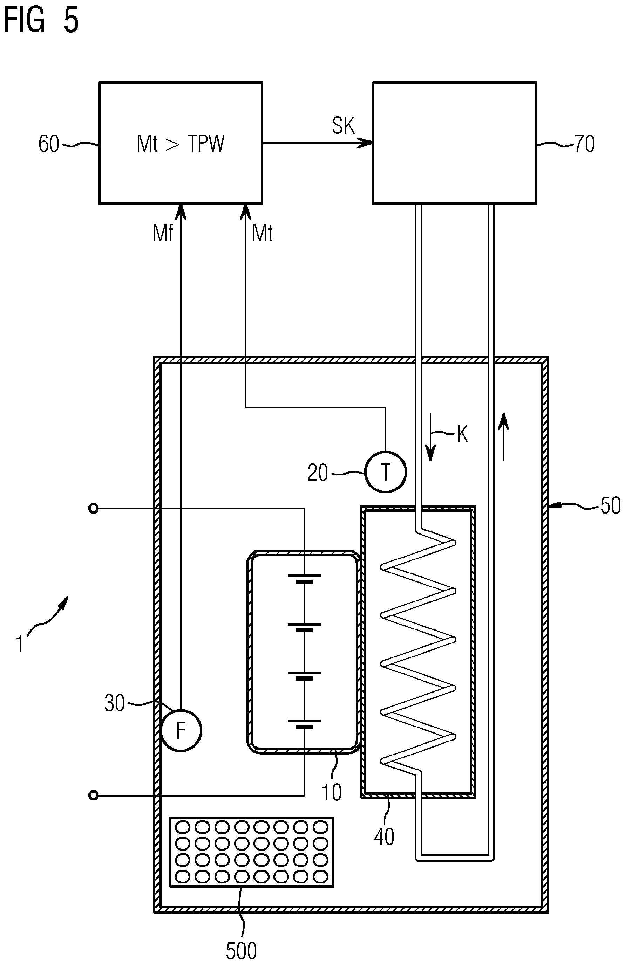

Die Figur 5 zeigt ein fünftes Ausführungsbeispiel für eine erfindungsgemäße Batterieeinheit 1. Das Ausführungsbeispiel gemäß Figur 5 entspricht im Wesentlichen dem Ausführungsbeispiel gemäß Figur 1 mit dem Unterschied, dass innerhalb des Batteriegehäuses 50 zusätzliche Feuchtespeicher 500 vorgesehen sind, die dazu geeignet sind, Feuchtigkeit aus der Umgebungsluft aufzunehmen, wenn die Luft sehr feucht ist, und gespeicherte Feuchtigkeit wieder abzugeben, wenn die Umgebungsluft trocken ist. Geeignete Materialien für Feuchtespeicher 500 sind beispielsweise Silicagele oder mineralische Tone.

Die in der Figur 5 gezeigten Feuchtespeicher 500 können selbstverständlich auch bei den Ausführungsbeispielen gemäß den Figuren 2 bis 4 eingesetzt werden.

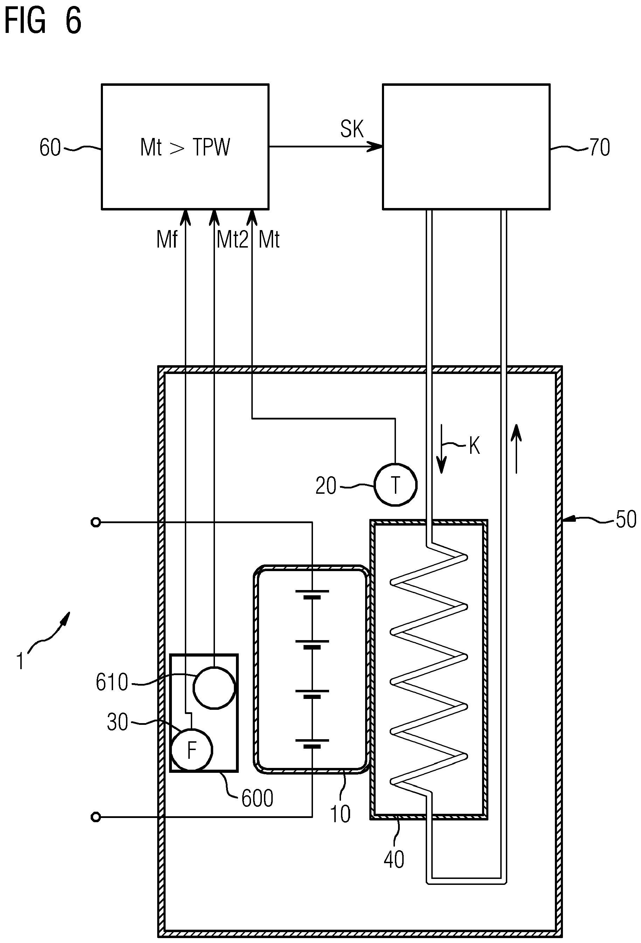

Die Figur 6 zeigt ein sechstes Ausführungsbeispiel für eine erfindungsgemäße Batterieeinheit 1. Dieses basiert wie auch das fünfte Ausführungsbeispiel auf der Ausführungsvariante gemäß Figur 1.

Bei der Ausführungsvariante gemäß Figur 6 ist die Luftfeuchtemesseinrichtung 30 in einer Sensorbaugruppe 600 integriert, die zusätzlich zu der Luftfeuchtemesseinrichtung 30 eine weitere Temperaturmesseinrichtung 610 aufweist. Die Steuereinrichtung 60 ist somit in der Lage, zwei Temperaturmesswerte, nämlich den Temperaturmesswert Mt der Temperaturmesseinrichtung 20 sowie zusätzlich den Temperaturmesswert Mt2 der weiteren Temperaturmesseinrichtung 610, auszuwerten. Beispielsweise kann die Steuereinrichtung 60 eine Plausibilitäts- bzw. Funktionskontrolle der Temperaturmesseinrichtung 20 anhand des von der weiteren Temperaturmesseinrichtung 610 gebildeten Temperaturmesswerts Mt2 durchführen. Auch ermöglicht die weitere Temperaturmesseinrichtung 610 bzw. der weitere Temperaturmesswert Mt2, dass als Feuchtewert Mf eine relative Feuchte zu der Steuereinrichtung 60 übermittelt wird, weil anhand des weiteren Temperaturmesswerts Mt2 und der relativen Feuchte die absolute Feuchte und/oder eine Taupunktangabe ermittelt werden kann.

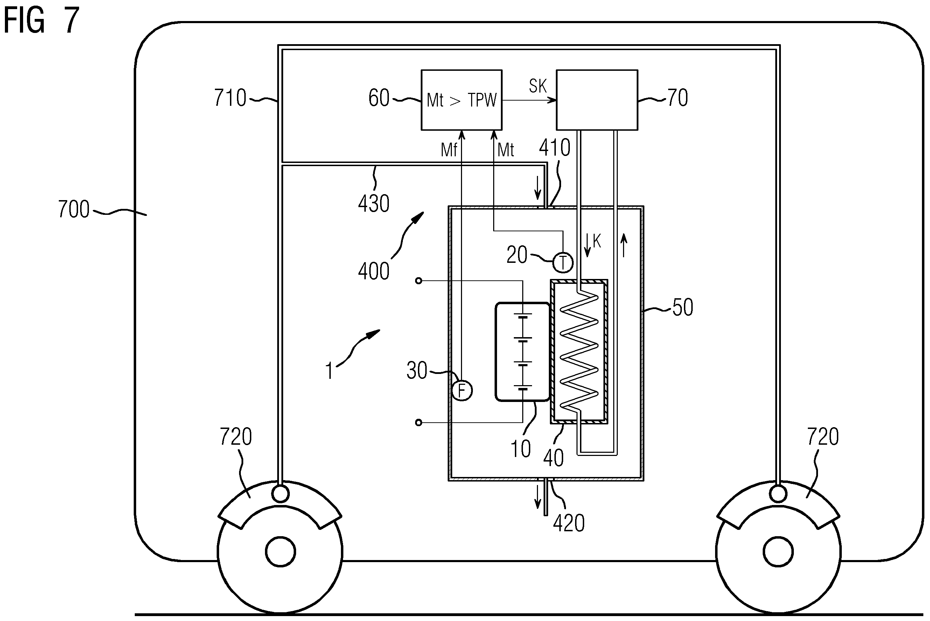

Die Figur 7 zeigt ein Ausführungsbeispiel für ein Schienenfahrzeug 700, das mit einer Batterieeinheit 1 ausgestattet ist, wie sie in der Figur 4 gezeigt ist. Die Druckluftleitung 430 der Belüftungseinrichtung 400 steht mit einem fahrzeugseitigen Druckluftsystem 710 in Verbindung, mit dem beispielsweise die in der Figur 7 gezeigte Fahrzeugbremsen 720 des Schienenfahrzeugs 700 betätigt werden können.

Alternativ oder zusätzlich können bei dem Schienenfahrzeug 700 gemäß Figur 7 eine oder mehrere der anderen, im Zusammenhang mit den Figuren 1 bis 3 sowie 5 und 6 erläuterten Ausführungsbeispiele für geeignete Batterieeinheiten 1 eingesetzt werden.

Bezugszeichenliste

| | |
|---|---|
| 1 | Batterieeinheit |
| 10 | Batteriezellen |
| 20 | Temperaturmesseinrichtung |
| 30 | Luftfeuchtemesseinrichtung |
| 40 | Kühlkörper |
| 50 | Batteriegehäuse |
| 51 | Endfläche |
| 52 | Endfläche |
| 53 | Mantelfläche |
| 60 | Steuereinrichtung |
| 70 | Kühleinrichtung |
| 200 | Heizeinrichtung |
| 400 | Belüftungssystem |
| 410 | Lufteinlassöffnung |
| 420 | Luftauslassöffnung |
| 430 | Druckluftleitung |
| 500 | Feuchtespeicher |
| 600 | Sensorbaugruppe |
| 610 | Temperaturmesseinrichtung |
| 700 | Schienenfahrzeug |
| 710 | Druckluftsystem |

| | |
|---|---|
| F | Luftfeuchte |
| K | Kühlmittel |
| L | Länge |
| Mf | Feuchtewert |
| Mt | Temperaturmesswert |
| Mt2 | Temperaturmesswert |
| SH | Steuersignal |
| SK | Steuersignal |
| T | Temperatur |
| TPW | Taupunkttemperaturwert |

**Patentansprüche**

1. Fahrzeug, aufweisend zumindest eine Batterieeinheit (1) mit einer oder mehreren Batteriezellen (10), zumindest einer Temperaturmesseinrichtung (20) und einem Kühlkörper (40), die gemeinsam in einem Batteriegehäuse (50) der Batterieeinheit (1) untergebracht sind, wobei zur Kühlung der Batterieeinheit (1) ein Kühlmittel (K) durch den Kühlkörper (40) fließen kann,
wobei

   - in dem Batteriegehäuse (50) zumindest eine Luftfeuchtemesseinrichtung (30) angeordnet ist, die geeignet ist, die Luftfeuchte (F) innerhalb des Batteriegehäuses (50) unter Bildung eines die Luftfeuchte (F) angebenden Feuchtewerts (Mf) zu messen, und
   - mit der Luftfeuchtemesseinrichtung (30) und der Temperaturmesseinrichtung (20) eine Steuereinrichtung (60) in Verbindung steht, die die Temperatur (T) des Kühlmittels (K) in Abhängigkeit von dem gemessenen Feuchtewert (Mf) und einem von der Temperaturmesseinrichtung (20) gemessenen Temperaturmesswert (Mt) beeinflusst,

   **dadurch gekennzeichnet, dass**

   - das Batteriegehäuse (50) mittels einer Belüftungseinrichtung (400) belüftbar ist,
   - die Belüftungseinrichtung (400) getrocknete Luft in das Batteriegehäuse (50) einspeist, und
   - die Belüftungseinrichtung (400) an ein Druckluftsystem (710) angeschlossen ist, das Druckluft zum Betrieb einer Fahrzeugkomponente, insbesondere einer Fahrzeugbremse (720), zur Verfügung stellt, und das Batteriegehäuse (50) mit der Druckluft belüftet wird oder die Druckluft zunächst entspannt wird und die entspannte Luft in das Batteriegehäuse (50) eingespeist wird.

2. Fahrzeug nach Anspruch 1,
   **dadurch gekennzeichnet, dass**
   die Steuereinrichtung (60) mit einer das Kühlmittel (K) kühlenden Kühleinrichtung (70) in Verbindung steht und die Kühlleistung der Kühleinrichtung (70) in Abhängigkeit von dem gemessenen Feuchtewert (Mf) und dem gemessenen Temperaturmesswert (Mt) steuert.

3. Fahrzeug nach einem der voranstehenden Ansprüche,
   **dadurch gekennzeichnet, dass**
   die Steuereinrichtung (60) mit einer Heizeinrichtung (200), die das Kühlmittel (K) erwärmen kann, in Verbindung steht und eine Heizleistung der Heizeinrichtung (200) in Abhängigkeit von dem gemessenen Feuchtewert (Mf) und dem gemessenen Temperaturmesswert (Mt) steuert.

4. Fahrzeug nach einem der voranstehenden Ansprüche,
   **dadurch gekennzeichnet, dass**
   die Steuereinrichtung (60) mittels des gemessenen Feuchtewerts (Mf) einen die Taupunkttemperatur der Luft in dem Batteriegehäuse (50) angebenden Taupunkttemperaturwert (TPW) ermittelt und die Temperatur (T) des Kühlmittels (K) derart beeinflusst, dass der Temperaturmesswert (Mt) größer als der Taupunkttemperaturwert (TPW) ist.

5. Fahrzeug nach Anspruch 4,
**dadurch gekennzeichnet, dass**
die Steuereinrichtung (60) die Temperatur (T) des Kühlmittels (K) erhöht, wenn der Temperaturmesswert (Mt) über ein vorgegebenes Maß hinaus zu dicht an dem Taupunkttemperaturwert (TPW) liegt oder diesen unterschreitet.

6. Fahrzeug nach Anspruch 4 oder 5,
**dadurch gekennzeichnet, dass**
die Steuereinrichtung (60) die Kühlleistung der Kühleinrichtung (70) reduziert, wenn der Temperaturmesswert (Mt) über ein vorgegebenes Maß hinaus zu dicht an dem Taupunkttemperaturwert (TPW) liegt oder diesen unterschreitet.

7. Fahrzeug nach einem der voranstehenden Ansprüche,
**dadurch gekennzeichnet, dass**

   - die Temperaturmesseinrichtung (20) an einer Stelle innerhalb des Batteriegehäuses (50) angeordnet ist, die beim Betrieb der Kühleinrichtung (70) kälter als eine andere Stelle innerhalb des Batteriegehäuses (50) ist, und
   - die Luftfeuchtemesseinrichtung (30) an dieser anderen Stelle angeordnet ist.

8. Fahrzeug nach einem der voranstehenden Ansprüche,
**dadurch gekennzeichnet, dass**
die Batterieeinheit (1) eine weitere Temperaturmesseinrichtung (610) aufweist, die mit der Luftfeuchtemesseinrichtung (30) eine Sensorbaugruppe (600) bildet.

9. Fahrzeug nach einem der voranstehenden Ansprüche,
**dadurch gekennzeichnet, dass**

   - das Batteriegehäuse (50) zumindest eine Lufteinlassöffnung (410) zum Einspeisen von Luft und zumindest eine Luftauslassöffnung (420) zum Ausströmen der Luft aufweist,
   - wobei die zumindest eine Lufteinlassöffnung (410) an einer Gehäuseseite und die zumindest eine Luftauslassöffnung (420) an der gegenüberliegenden Gehäuseseite angeordnet ist.

10. Fahrzeug nach einem der voranstehenden Ansprüche,
**dadurch gekennzeichnet, dass**
in dem Batteriegehäuse (50) zumindest ein Feuchtespeicher (500) angeordnet ist, der Feuchte aufnehmen und gespeicherte Feuchte abgeben kann.

11. Fahrzeug nach einem der voranstehenden Ansprüche,
**dadurch gekennzeichnet, dass**
das Fahrzeug ein Schienenfahrzeug (700) ist.

12. Verfahren zum Betreiben eines Fahrzeugs mit zumindest einer Batterieeinheit (1), die eine oder mehrere Batteriezellen (10), zumindest eine Temperaturmesseinrichtung (20) und einen Kühlkörper (40) aufweist, die gemeinsam in einem Batteriegehäuse (50) der Batterieeinheit (1) untergebracht sind, wobei die Batterieeinheit (1) mit einem Kühlmittel (K), das den Kühlkörper (40) durchfließt, gekühlt wird, wobei

   - in dem Gehäuse zumindest eine Luftfeuchtemesseinrichtung (30) angeordnet ist und mit dieser die Luftfeuchte (F) innerhalb des Batteriegehäuses (50) unter Bildung eines die Luftfeuchte (F) angebenden Feuchtewerts (Mf) gemessen wird und
   - die Temperatur (T) des Kühlmittels (K) in Abhängigkeit von dem gemessenen Feuchtewert (Mf) und einem von der Temperaturmesseinrichtung (20) gemessenen Temperaturmesswert (Mt) beeinflusst wird,
   - das Batteriegehäuse (50) mittels einer Belüftungseinrichtung (400) belüftet wird,
   - die Belüftungseinrichtung (400) getrocknete Luft in das Batteriegehäuse (50) einspeist, und
   - die Belüftungseinrichtung (400) an ein Druckluftsystem (710) angeschlossen ist, das Druckluft zum Betrieb einer Fahrzeugkomponente, insbesondere einer Fahrzeugbremse (720), zur Verfügung stellt, und das Batteriegehäuse (50) mit der Druckluft belüftet wird oder die Druckluft zunächst entspannt wird und die entspannte Luft in das Batteriegehäuse (50) eingespeist wird.

**Claims**

1. Vehicle, having at least one battery unit (1) with one or more battery cells (10), at least one temperature measurement facility (20) and a heat sink (40), which are accommodated together in a battery housing (50) of the battery unit (1), wherein a coolant (K) is able to flow through the heat sink (40) to cool the battery unit (1),
wherein

   - at least one air humidity measurement facility (30), which is suitable for measuring the air humidity (F) within the battery housing (50) with the formation of a humidity value (Mf) that indicates the air humidity (F), is arranged in the battery housing (50), and

- a control facility (60), which influences the temperature (T) of the coolant (K) as a function of the measured humidity value (Mf) and a temperature measurement value (Mt) measured by the temperature measurement facility (20), is connected to the air humidity measurement facility (30) and the temperature measurement facility (20),

characterised in that

- the battery housing (50) can be ventilated by means of a ventilation facility (400),
- the ventilation facility (400) feeds dehumidified air into the battery housing (50), and
- the ventilation facility (400) is connected to a compressed air system (710), which supplies compressed air for operating a vehicle component, in particular a vehicle brake (720), and the battery housing (50) is ventilated by the compressed air or the compressed air is first depressurised and the depressurised air is fed into the battery housing (50).

2. Vehicle according to claim 1,
   **characterised in that**
   the control facility (60) is connected to a cooling facility (70) that cools the coolant (K) and controls the cooling output of the cooling facility (70) as a function of the measured humidity value (Mf) and the measured temperature measurement value (Mt).

3. Vehicle according to one of the preceding claims,
   **characterised in that**
   the control facility (60) is connected to a heating facility (200) that is able to heat the coolant (K) and controls a heating output of the heating facility (200) as a function of the measured humidity value (Mf) and the measured temperature measurement value (Mt).

4. Vehicle according to one of the preceding claims,
   **characterised in that**
   the control facility (60) ascertains a dew point temperature value (TPW), which indicates the dew point temperature of the air in the battery housing (50), by means of the measured humidity value (Mf) and influences the temperature (T) of the coolant (K) in such a manner that the temperature measurement value (Mt) is greater than the dew point temperature value (TPW) .

5. Vehicle according to claim 4,
   **characterised in that**
   the control facility (60) increases the temperature (T) of the coolant (K) if the temperature measurement value (Mt) is too close to the dew point temperature value (TPW), or exceeds it, by more than a predefined amount.

6. Vehicle according to claim 4 or 5,
   **characterised in that**
   the control facility (60) reduces the cooling output of the cooling facility (70) if the temperature measurement value (Mt) is too close to the dew point temperature value (TPW), or exceeds it, by more than a predefined amount.

7. Vehicle according to one of the preceding claims,
   **characterised in that**

   - the temperature measurement facility (20) is arranged at a point within the battery housing (50) that is cooler than another point within the battery housing (50) during operation of the cooling facility (70), and
   - the air humidity measurement facility (30) is arranged at said other point.

8. Vehicle according to one of the preceding claims,
   **characterised in that**
   the battery unit (1) has a further temperature measurement facility (610) that forms a sensor assembly (600) together with the air humidity measurement facility (30).

9. Vehicle according to one of the preceding claims,
   **characterised in that**

   - the battery housing (50) has at least one air inlet opening (410) for the feeding of air and at least one air outlet opening (420) for the escape of the air,
   - wherein the at least one air inlet opening (410) is arranged on one housing side and the at least one air outlet opening (420) is arranged on the opposite housing side.

10. Vehicle according to one of the preceding claims,
    **characterised in that**
    at least one humidity storage unit (500), which is able to absorb humidity and release stored humidity, is arranged in the battery housing (50).

11. Vehicle according to one of the preceding claims,
    **characterised in that**
    the vehicle is a rail vehicle (700).

12. Method for operating a vehicle with at least one battery unit (1), which has one or more battery cells (10), at least one temperature measurement facility (20) and a heat sink (40), which are accommodated together in a battery housing (50) of the battery unit (1), wherein the battery unit (1) is cooled by a coolant (K) that flows through the heat sink (40), wherein

- at least one air humidity measurement facility (30) is arranged in the housing, and with this the air humidity (F) within the battery housing (50) is measured with the formation of a humidity value (Mf) that indicates the air humidity (F) and
- the temperature (T) of the coolant (K) is influenced as a function of the measured humidity value (Mf) and a temperature measurement value (Mt) measured by the temperature measurement facility (20),
- the battery housing (50) is ventilated by means of a ventilation facility (400),
- the ventilation facility (400) feeds dehumidified air into the battery housing (50), and
- the ventilation facility (400) is connected to a compressed air system (710), which supplies compressed air for operating a vehicle component, in particular a vehicle brake (720), and the battery housing (50) is ventilated by the compressed air or the compressed air is first depressurised and the depressurised air is fed into the battery housing (50).

**Revendications**

1. Véhicule, comportant au moins une unité (1) de batterie ayant un ou plusieurs éléments (10) de batterie, au moins un dispositif (20) de mesure de la température et un refroidisseur (40), qui sont logés ensemble dans un boîtier (50) de batterie de l'unité (1) de batterie, dans lequel, pour le refroidissement de l'unité (1) de batterie, un réfrigérant (K) peut passer dans le refroidisseur (40),
dans lequel

   - dans le boîtier (50) de batterie est disposé au moins un dispositif (30) de mesure de l'humidité de l'air, qui est propre à mesurer l'humidité (F) de l'air à l'intérieur du boîtier (50) de batterie, avec formation d'une valeur (Mf) d'humidité indiquant l'humidité (F) de l'air, et
   - est en liaison avec le dispositif (30) de mesure de l'humidité de l'air et le dispositif (20) de mesure de la température un dispositif (60) de commande, qui influence la température (T) du réfrigérant (K) en fonction de la valeur (Mf) de l'humidité mesurée et d'une valeur (Mt) de mesure de la température mesurée par le dispositif (20) de mesure de la température,

   **caractérisé en ce que**

   - le boîtier (50) de batterie peut être alimenté en air au moyen d'un dispositif (400) d'alimentation en air,
   - le dispositif (400) d'alimentation en air injecte de l'air séché dans le boîtier (50) de batterie et

   - le dispositif (400) d'alimentation en air est raccordé à un système (710) d'air comprimé, qui met l'air comprimé à disposition pour faire fonctionner un élément du véhicule, en particulier un frein (720) du véhicule, et on alimente en air comprimé le boîtier (50) de batterie ou on détend d'abord l'air comprimé et on injecte l'air détendu dans le boîtier (50) de batterie.

2. Véhicule suivant la revendication 1, **caractérisé en ce que**
le dispositif (60) de commande est en liaison avec un dispositif (70) de refroidissement refroidissant le réfrigérant (K) et commande la puissance de refroidissement du dispositif (70) de refroidissement en fonction de la valeur (Mf) d'humidité mesurée et de la valeur (Mt) de mesure de température mesurée.

3. Véhicule suivant l'une des revendications précédentes, **caractérisé en ce que**
le dispositif (60) de commande est en liaison avec un dispositif (200) de chauffage, qui peut chauffer le réfrigérant (K) et commande une puissance de chauffage du dispositif (200) de chauffage, en fonction de la valeur (Mf) de l'humidité mesurée et de la valeur (Mt) de mesure de température mesurée.

4. Véhicule suivant l'une des revendications précédentes, **caractérisé en ce que**
le dispositif (60) de commande détermine, au moyen de la valeur (Mf) d'humidité mesurée, une valeur (TPW) de température de point de rosée indiquant la température du point de rosée de l'air dans le boîtier (50) de batterie et influence la température (T) du réfrigérant (K), de manière à ce que la valeur (Mt) de mesure de température soit plus grande que la valeur (TPW) de température du point de rosée.

5. Véhicule suivant la revendication 4, **caractérisé en ce que**
le dispositif (60) de commande élève la température (T) du réfrigérant (K), si la valeur (Mt) de mesure de température se rapproche trop, au-delà d'une mesure donnée à l'avance, de la valeur (TPW) de température du point de rosée ou lui est inférieure.

6. Véhicule suivant la revendication 4 ou 5, **caractérisé en ce que**
le dispositif (60) de commande réduit la puissance de refroidissement du dispositif (70) de refroidissement, si la valeur (Mt) de mesure ou de température se rapproche trop, au-delà d'une mesure donnée à l'avance, de la valeur (TPW) de température du point de rosée ou lui est inférieure.

7. Véhicule suivant l'une des revendications précédentes,
**caractérisé en ce que**

- le dispositif (20) de mesure de la température est disposé en un point à l'intérieur du boîtier (50) de batterie, qui, lorsque le dispositif (70) de refroidissement fonctionne, est plus froid qu'un autre point à l'intérieur du boîtier (50) de batterie, et

- le dispositif (30) de mesure de l'humidité de l'air est disposé en cet autre point.

8. Procédé suivant l'une des revendications précédentes,
**caractérisé en ce que**
l'unité (1) de batterie a un autre dispositif (610) de mesure de la température, qui forme un module (600) de capteur avec le dispositif (30) de mesure de l'humidité de l'air.

9. Véhicule suivant l'une des revendications précédentes,
**caractérisé en ce que**

- le boîtier (50) de batterie a au moins une ouverture (410) d'entrée d'air pour l'entrée de l'air et au moins une ouverture (420) de sortie de l'air pour la sortie de l'air,
- dans lequel la au moins une ouverture (410) d'entrée d'air est disposée d'un côté du boîtier et la au moins une ouverture (420) de sortie de l'air est disposée du côté opposé du boîtier.

10. Véhicule suivant l'une des revendications précédentes,
**caractérisé en ce que**
dans le boîtier (50) de batterie est disposé au moins un accumulateur (500) d'humidité, qui peut absorber de l'humidité et céder de l'humidité emmagasinée.

11. Véhicule suivant l'une des revendications précédentes,
**caractérisé en ce que**
le véhicule est un véhicule (700) ferroviaire.

12. Procédé pour faire fonctionner un véhicule ayant au moins une unité (1) de batterie, qui a un ou plusieurs éléments (10) de batterie, au moins un dispositif (20) de mesure de la température et un refroidisseur (40), qui sont logés ensemble dans un boîtier (50) de batterie de l'unité (1) de batterie, dans lequel on refroidit l'unité (1) de batterie par un réfrigérant (K), qui passe dans le refroidisseur (40),
dans lequel

- dans le boîtier est disposé au moins un dispositif (30) de mesure de l'humidité de l'air et, par celui-ci, on mesure l'humidité (F) de l'air dans le boîtier (50) de batterie avec formation d'une valeur (Mf) d'humidité indiquant l'humidité (F) de l'air et

- on influence la température (T) du réfrigérant (K), en fonction de la valeur (Mf) d'humidité mesurée et d'une valeur (Mt) de mesure de température mesurée par le dispositif (20) de mesure de la température,

- on alimente en air le boîtier (50) de batterie au moyen d'un dispositif (400) d'alimentation en air,
- le dispositif (400) d'alimentation en air envoie de l'air séché dans le boîtier (50) de batterie, et
- le dispositif (400) d'alimentation en air est raccordé à un système (710) d'air comprimé, qui met à disposition l'air comprimé pour le fonctionnement d'un élément du véhicule, en particulier d'un frein (720) du véhicule, et on alimente le boîtier (50) de batterie en air comprimé ou on détend d'abord l'air comprimé et on envoie l'air détendu dans le boîtier (50) de batterie.

## FIG 1

# FIG 2

FIG 3

# FIG 4

$Mt > TPW$ — 60

SK — 70

Mf    Mt

430

710

400

410

51

20    T

K

50

1

L

30    F

53

10

40

420    52

FIG 5

# FIG 6

FIG 7

EP 3 975 318 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014025667 A1
- DE 102013214998 A1

- JP 2010062130 A